# EUROPÄISCHE PATENTSCHRIFT

(11) **EP 0 443 093 B1**
(45) Veröffentlichungstag und Bekanntmachung des Hinweises auf die Patenterteilung: **04.05.1994**
(21) Anmeldenummer: 90120185.5
(22) Anmeldetag: 20.10.1990
(51) Int. Cl.: F16D 69/04, F16D 65/02, F16D 65/84, F16D 69/02

(54) **Verfahren zur Herstellung einer Verbindung zwischen Trägerplatte und reibbelag eines Scheibenbremsbelags und Scheibenbremsbeläge mit dieser Verbindung**
Method of making a joint between a support plate and a friction lining of a disc brake friction lining and disc brake friction linings with such a joint
Méthode pour créer une liaison entre une plaque de support et une garniture de friction d'une garniture de frein à disque et garnitures de frein à disque comportant une telle liaison

(30) Priorität: 24.01.1990 DE 4001969
(43) Veröffentlichungstag der Anmeldung: 28.08.1991
(73) Patentinhaber: RÜTGERS PAGID AKTIENGESELLSCHAFT, 45356 Essen (DE)
(72) Erfinder: Goldbach, Dieter, W-6380 Bad Homburg (DE); Eckert, Armin, W-4355 Waltrop (DE)

(56) Entgegenhaltungen:
- EP-A- 0 194 094
- DE-A- 2 928 572
- DE-A- 3 617 846
- DE-U- 8 809 363
- US-A- 2 631 961
- PATENT ABSTRACTS OF JAPAN, Band 10, Nr. 122 (M-476)[2179], 7. Mai 1986;& JP-A-60 249 744 (HITACHI KASEI KOGYO K.K.) 10-12-1985

## Beschreibung

Die Erfindung betrifft ein Verfahren zur Herstellung einer festen und dauerhaften Verbindung zwischen dem Reibbelag und der Belagträgerplatte eines Scheibenbremsbelags.

Ein Scheibenbremsbelag besteht üblicherweise aus einer Reibmasseschicht, einer Trägermasseschicht und einer Belagträgerplatte. Die Trägermasse soll für einen Spannungsausgleich zwischen Reibmasseschicht und Belagträgerplatte sorgen. Daneben soll sie noch andere Aufgaben erfüllen, wie beispielsweise für eine verbesserte Wärmeisolierung, Geräuschreduzierung und für den Korrosionsschutz der Belagträgerplatte sorgen. Dabei müssen die Reibmasse und die Trägermasse gut aufeinander abgestimmt sein. Die Trägermasse enthält üblicherweise hitzehärtbare Harze als Bindemittel, um die notwendige mechanische Festigkeit zu erreichen, anorganische Füllstoffe für die Wärmedämmung, Metallpulver als "Opferanoden" für den Korrosionsschutz und teilweise auch Kautschuk, um zur Geräuschdämpfung beizutragen.

Wie in der DE 36 17 846 A1 beschrieben, erfolgt die Herstellung des Scheibenbremsbelages im allgemeinen in der Weise, daß die Zwischenschicht in Pulverform in eine Preßform eingebracht wird und zusammen mit dem pulverförmigen Reibmaterial und der Trägerplatte, die mit einem wärmeaktivierbaren Kleber beschichtet ist, heiß verpreßt wird.

Durch den Kleber wird erreicht, daß beim Abscheren des Reibbelags noch Reste der Reib- bzw. Trägermasse auf der Belagträgerplatte verbleiben, mit denen das Fahrzeug noch zum Halten gebracht werden soll. Hierzu ist es aber erforderlich, daß das Abscherbild eine möglichst vollständige Abdeckung der Trägerplattenoberfläche zumindest mit Resten der Trägermasse im Bereich des abgescherten Reibbelags aufweist. Dies ist bei den üblichen Scheibenbremsenbelägen jedoch häufig nicht der Fall.

Es bestand daher die Aufgabe, ein Verfahren zur Verbindung von Reibbelag und Belagträgerplatte zu schaffen, die ein verbessertes Abscherbild bewirkt, wobei gleichzeitig die Abscherkraft erhöht wird.

Die Aufgabe wird erfindungsgemäß dadurch gelöst, daß auf die oberhalb der Reibbelagschicht in die Form gefüllte pulverförmige Trägermasse ein Granulat einer mit einem Kleber modifizierten Trägermasse so aufgestreut sind, daß 10 bis 80 % der Oberfläche mit dem Granulat abgedeckt sind, die mit Kleber beschichtete Belagträgerplatte aufgelegt, und der gesamte Aufbau vor dem eigentlichen Heißverpressen bei 120 bis 180 °C zwei- bis viermal unter einem Druck von 5 bis 15 MPa vorverdichtet wird.

Als Kleber können beispielsweise mit Phenolharzen modifizierter Nitrilkautschuk verwendet werden oder solche auf Vinyl-Phenol-Basis. Der Anteil der modifizierten Trägermasse an der gesamten Trägermasse beträgt vorzugsweise 10 bis 50 Gew.-%. Bei der Herstellung der Granulate wird der Trägermasse im Mischer 1 bis 40 Gew.-% Festkörper des gelösten Klebers zugemischt, bis Granulate mit einem Durchmesser von 1 bis 4 mm entstehen, die anschließend getrocknet werden.

Überraschenderweise hat es sich gezeigt, daß die erfindungsgemäß hergestellten Bremsbeläge nicht nur ein Abscherbild mit nahezu 100 %iger Abdeckung der Belagträgerplatte hatten, sondern auch die Abscherkraft bis zu 30 % über der der herkömmlichen Bremsbeläge lag.

Das erfindungsgemäße Verfahren ist für alle bei Reibbelägen üblichen Kleber und Trägermassen anwendbar, wobei der Kleber natürlich auf die Trägermasse und auf das Preß- und Wärmenachbehandlungsverfahren abzustimmen ist.

Die Vorverdichtung kann natürlich auch in mehr als vier Stufen erfolgen. Die Versuche haben jedoch gezeigt, daß mehr als vier Stufen keine merkliche Verbesserung des Scherbildes oder Erhöhung der Abscherkraft bewirken.

Ebenso ist eine vollständige Abdeckung der pulverförmigen Trägermasse mit dem Granulat möglich, aber sie bringt keine Eigenschaftsverbesserung. Bei einer Abdeckung von weniger als 10 % wird nur eine geringfügige Verbesserung erreicht.

Die Erfindung wird anhand der Beispiele näher erläutert, ohne darauf beschränkt zu sein.

### Beispiele

### Beispiel 1

Die pulverförmige Reibmasse wird in die Form gefüllt und glattgestrichen. Darauf wird eine 2 mm dicke Schicht der pulverförmigen Trägermasse gegeben, die als Bindemittel Novolake enthält. Die Oberfläche wird zu etwa 50 % mit einem Granulat mit einem mittleren Korndurchmesser von 2,5 mm abgedeckt, das aus der Trägermasse unter Zusatz von 20 Gew.-% Festkörper eines gelösten mit Phenolharzen modifizierten Nitrilkautschuks hergestellt wurde. Darauf wird die mit einer 20 µm dicken Schicht aus mit Phenolharzen modifiziertem Nitrilkautschuk beschichteten Belagträgerplatte aufgelegt. Die Form wird auf 160 °C erhitzt und die Massen 3 mal bis auf einen Druck von 10 MPa vorverdichtet. Zwischen den Vorverdichtungsstufen und am Ende wird das Preßteil vollständig entlastet. Anschließend wird der Bremsbelag bei 30 MPa bis auf seine endgültige Dicke gepreßt, bei 220 °C wärmebehandelt, und auf der Reibbelagsseite abgeschliffen.

Bei dem anschließenden Scherversuch war eine Scherkraft von 35 kN erforderlich, um den Reibbelag abzuscheren. Das Scherbild zeigte eine 100 %ige Abdeckung der Belagträgerplatte im Bereich des Reibbelags mit Resten der Reib- bzw. Trägermasse.

### Beispiel 2 (Vergleich)

Entsprechend dem Beispiel 1 wird ein Bremsbelag hergestellt, jedoch ohne Vorverdichtung. Die Scherkraft betrug 27 kN, und das Scherbild zeigte nur eine Abdeckung von 90 %.

### Beispiel 3 (Vergleich)

Entsprechend dem Beispiel 2 wird ein Bremsbelag hergestellt, jedoch ohne Zusatz von granulierter modifizierter Trägermasse. Es wurde eine Scherkraft von 24 kN gemessen und das Scherbild zeigte nur eine Abdeckung von 85 %.

Wie der Vergleich der Beispiele 1 bis 3 zeigt, bringt der Zusatz von mit Klebern modifiziertem Trägermassengranulat kaum eine Verbesserung der Scherkraft und des Scherbildes. Erst die Kombination von Vorverdichtungsstufen und modifiziertem Trägermassengranulat führt überraschenderweise zu der verbesserten Verbindung zwischen Trägerplatte und Reibbelag.

## Patentansprüche

1. Verfahren zur Herstellung einer Verbindung der Belagträgerplatte mit dem Reibbelag eines Scheibenbremsbelages mit Hilfe einer Trägermasse und eines auf die Belagträgerplatte aufgebrachten Klebers, wobei zwischen dem Reibbelag und der mit einem wärmeaktivierbaren Kleber beschichteten Belagträgerplatte eine Trägermasseschicht aus hitzehärtbarem Harz als Bindemittel, anorganischen Füllstoffen, Metallpulver und ggf. Kautschuk angeordnet ist, und die Reibbelag- und Trägermasseschichten und die Belagträgerplatte in einer Preßform durch Heißverpressen verbunden werden, **dadurch gekennzeichnet,** daß auf die oberhalb der Reibbelagschicht in die Form gefüllte pulverförmige Trägermasse ein Granulat aus der zusätzlich mit einem Kleber modifizierten Trägermasse so aufgestreut wird, daß 10 bis 80 % der Oberfläche mit dem Granulat abgedeckt sind, die mit Kleber beschichtete Belagträgerplatte aufgelegt, und der gesamte Aufbau vor dem eigentlichen Heißpressen bei 120 bis 180 °C zwei- bis viermal unter einem Druck von 5 bis 15 MPa vorverdichtet wird.

2. Verfahren nach Anspruch 1, **dadurch gekennzeichnet**, daß der Kleber zum Modifizieren der Trägermasse ein mit Phenolharzen modifizierter Nitrilkautschuk ist.

3. Verfahren nach Anspruch 1 oder 2, **dadurch gekennzeichnet**, daß das Granulat 1 bis 40 Gew.-% Festkörper eines Klebers enthält und einen Durchmesser von 1 bis 4 mm hat.

4. Verfahren nach einem der Ansprüche 1 bis 3, **dadurch gekennzeichnet**, daß der Anteil der modifizierten Trägermasse an der gesamten Trägermasse 10 bis 50 Gew.-% beträgt.

## Claims

1. A method of making a connection between the lining support plate with the friction lining of a disc-brake lining by means of a support substance and an adhesive applied to the lining support plate, whereas between the friction lining and the lining support plate which is coated with a thermoactivable adhesive is a coating of a support substance comprising a heat curable resin as binder, anorganic fillers, metal powder and possibly rubber, and the friction lining and the coating of the support substance and the lining support plate are connected by hot pressing in a pressing mould, characterised in that a granulate of a support substance modified additionally with an adhesive is scattered on the powdery support substance which has been poured into the mould on top of the friction lining layer in such a way that 10 to 80 % of the surface is covered with the granulate, the lining support plate coated with adhesive is laid on, and the whole structure is pre-compressed two to four times under a pressure of 5 to 15 MPa before the actual hot-pressing at 120 to 180 °C.

2. A method according to claim 1, characterised in that the adhesive for modifying the support substance is a nitrile rubber modified with phenol resins.

3. A method according to claim 1 or 2, characterised in that the granulate contains 1 to 40 wt.-% solids of an adhesive and has a diameter of 1 to 4 mm.

4. A method according to any one of claims 1 to 3, characterised in that the proportion of the modified support substance in the whole support substance is 10 to 50 wt.-%.

## Revendications

1. Procédé pour la production d'une liaison de la plaque de support de garniture avec la garniture de friction d'une garniture de frein à disque à l'aide d'une pâte porteuse et d'une substance adhésive déposée sur la plaque de support de garniture, à l'occasion de quoi entre la garniture de friction et la plaque de support de garniture, qui est couché avec une colle réactife au temperature, une couche d'une masse de support, qui se compose de resine thermodurcissable comme liant, des fillers anorganiques, de poudre de metal ou de cautchouc, est arrangée et les couches de la garniture de friction et de support de garniture et la plaque de support de garniture sont liées par compression à haute temperature dans un moule à presse, caractérisé en ce que sur la pâte porteuse pulvérulente introduite dans le moule, sur la couche de la garniture de friction, on disperse un granulat d'une pâte porteuse modifiée en plus par une substance adhésive de façon à recouvrir de granulat 10 à 80 % de la surface, qui est revêtue de la plaque de support de garniture comportant la substance adhésive, et l'ensemble de la structure est pré-comprimé avant la pressage à chaud proprement dit à 120 jusqu'à 180 °C de deux à quatre fois sous une pression de 5 jusqu'à 15 MPa.

2. Procédé selon la revendication 1, caractérisé en ce que la substance adhésive destinée à modifier la pâte porteuse est un caoutchouc de nitrile modifié par des résines phénoliques.

3. Procédé selon la revendication 1 ou 2, caractérisé en ce que le granulat contient 1 à 40 % en poids de matière solide d'une substance adhésive et a un diamètre de 1 à 4 mm.

4. Procédé selon l'une des revendications 1 à 3, caractérisé en ce que la proportion de pâte porteuse modifiée par rapport à la pâte porteuse globale est de 10 à 50 % en poids.
